# EUROPEAN PATENT SPECIFICATION

(11) **EP 1 084 386 B1**
(45) Date of publication and mention of the grant of the patent: **27.08.2003**
(21) Application number: 99917948.4
(22) Date of filing: 01.04.1999
(51) Int. Cl.: G01L 9/00, G01L 7/08

(54) **PRESSURE SENSOR WITH ACTUATOR BETWEEN DIAPHRAGM AND TRANSDUCER**
DRUCKSENSOR MIT AKTUATOR ZWISCHEN DIAPHRAGMA UND MESSWANDLER
CAPTEUR DE PRESSION DOTE D'UN ORGANE D'ACTIONNEMENT SITUE ENTRE UNE MEMBRANE ET UN TRANSDUCTEUR

(30) Priority: 06.04.1998 GB 9807404
(43) Date of publication of application: 21.03.2001
(73) Proprietor: RANCO CONTROLS LIMITED, Plymouth PL6 6QT, Devon (GB)
(72) Inventor: BURNS, Stephen, J., Plymouth, Devon PL9 9TH (GB); BLACK, Robert, J., Plymouth, Devon PL3 6NH (GB)
(74) Representative: Mitchell, Alan
(86) International application number: EP9902250
(87) International publication number: WO99051957

(56) References cited:
- EP-A- 0 383 165
- US-A- 4 449 113
- US-A- 4 648 277
- US-A- 5 004 996

## Description

This invention relates to a pressure sensor, and more particularly though not exclusively to a pressure sensor included in a domestic central heating boiler for monitoring the pressure in the central heating circuit, such as for shutting down operation of the boiler in the event of the monitored pressure level exceeding or falling below a predetermined value. In this way, the pressure sensor can be used to provide an essential safety function.

More specifically, the invention relates to a pressure sensor comprising a main body defining a pressure port, an actuator which is movably mounted within the body so as to be urged in an axial direction, under fluid pressure admitted through said pressure port, against the action of a spring means and a calibratable transducer coupled to the actuator for providing an output signal dependent on the axial position of said actuator, said actuator including an adjustment device for setting the calibration of said transducer, said adjustment device comprising a body part, operatively coupled at one end to said transducer, and an adjustment cap, which is coupled to the body part by means of an adjustable screwthreaded connection and against which the spring means acts, there being a diaphragm mounted within said main body with one side thereof acting on the adjustment cap and the other side arranged to be subjected to the fluid pressure admitted through said pressure port.

Such a pressure sensor is disclosed in US-A-5004996. Unlike in the pressure sensor forming the subject of the present application, the adjustment cap is coupled to the one end of the body part. Furthermore, this coupling is by means of an indirect engagement via an adjuster which is located in a screwthreaded bore in the adjustment cap.

In known pressure sensors, due to manufacturing tolerances in the components of the sensor and the effect of variation in the free (unstressed) length of a compression return spring commonly used in such sensors to return the operating components to a rest position when the monitored pressure is removed, it is necessary to calibrate the pressure sensor, so that its output signal indicates a zero pressure value when there is no applied pressure.

The present invention is concerned with an improved pressure sensor in which provision is made for calibrating the pressure transducer included in the pressure sensor and, once calibration is completed, the setting of the assembled sensor cannot be adjusted from the outside. Furthermore, the construction is to be of simple, compact design and extremely reliable and accurate in operation.

US-A-4648277 and US-A-4449113 both disclose pressure sensors having an actuator providing an indirect screwthreaded connection between an adjustment device and a component whose position is to be set.

EP-A-0383165 discloses a pressure sensor having a thick film potentiometer serving as a transducer.

According to the invention there is provided a pressure sensor as initially defined, characterized in that the adjustment cap is coupled to the other end of the body part and such coupling is by means of direct screwthreaded engagement between the adjustment cap and said the other end of the body part, provided by said adjustable screwthreaded connection.

Preferably, the spring means is a compression spring acting at one end against a support fixed within said main body and at the other end against said adjustment cap, said body part being in the form of a cylinder through which the compression spring extends.

The screwthreaded connection may comprise an arrangement of outward projections spaced at intervals around said other end of said body part, each of part-helical form, and an arrangement of claw-like projections on said adjustment cap, each such projection engaging around a respective outward projection. Desirably, the part-helical end of each outward projection facing the adjustment cap is formed with serrations, defining discrete set angular positions of said adjustment cap relative to said body part, and each claw-like projection is formed with a protuberance for engagement with said serrations in any selected one of said set angular positions.

The diaphragm is a preferably rolling diaphragm, a portion of which extends around an axial cylindrical end portion of said adjustment cap.

The transducer may be coupled to a mechanical operating part of the transducer for providing an output signal dependent on the axial position of the actuator, there being a one-to-one positional relationship between the axial positions of the actuator and the mechanical operating part. In this embodiment, it is preferable that the transducer be a thick film potentiometer.

In a preferred arrangement, the mechanical operating part is a wiper of the potentiometer and a slide member secured to the body part may be slidably mounted in said main body and carries said wiper of said potentiometer. Preferably, there is a one-to-one positional relationship between the axial position of the adjustment cap and the axial position of said wiper.

For a better understanding of the invention and to show how the same may be carried into effect, reference will now be made, by way of example, to the accompanying drawings, in which:-
Fig. 1 is a longitudinal sectional view through a pressure sensor forming an embodiment of the invention, taken along the line I-I in Fig. 4;
Fig. 2 is a perspective view of part of an adjustment device included in the pressure sensor of Figure 1;
Fig. 3 is a transverse sectional view taken along the line III-III in Figure 1;
Fig. 4 is an end view of the pressure sensor seen from the left-hand side in Figure 1, with an end closure and collar of the pressure sensor removed; and
Fig. 5 is an exploded view showing the several components making up the pressure sensor.

The pressure sensor shown in the drawings is intended for use within a domestic heating combination boiler to monitor the water pressure in the central heating circuit. However, it will be appreciated that such use of the pressure sensor is not limitative, and that the sensor finds application for monitoring pressure, whether gas, liquid or vapour, in other situations.

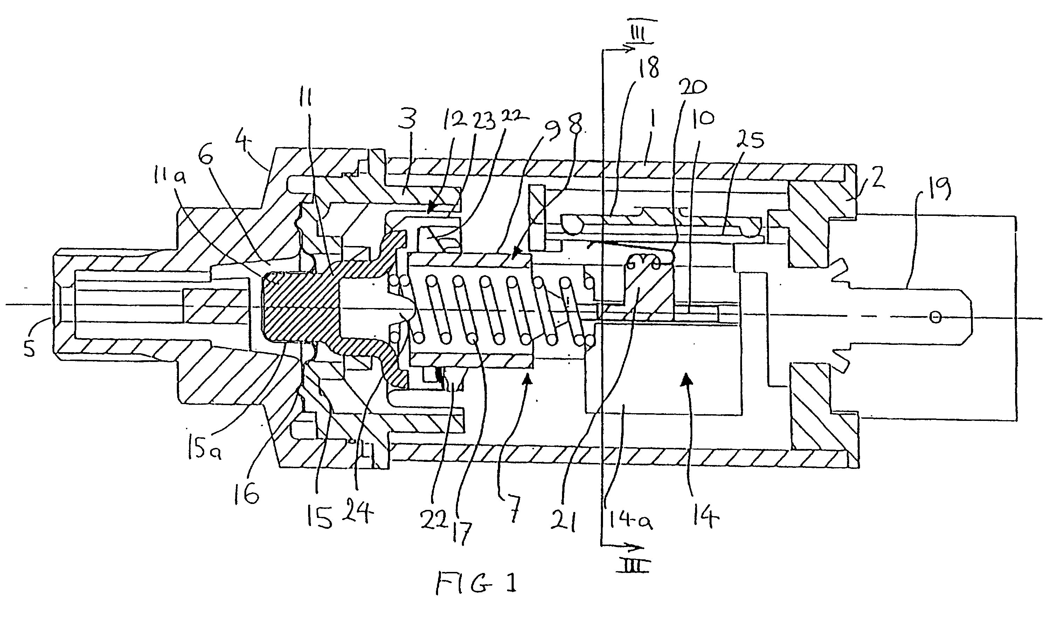

With particular reference to Figure 1, the pressure sensor comprises a main body 1, of cylindrical form, which is closed at one end by an end closure 2. A collar 3 is fitted in the main body 1 at the opposite end. Suitably, snap-fit connections (not shown) are used to secure the end closure 2 and collar 3 to the main body 1.

Fitted around a projecting end portion of the collar 3 is an end closure 4 defining a pressure port 5 that is coaxial with the axis of the cylindrical main body 1 and communicates with a pressure chamber 6 defined within the end closure 4.

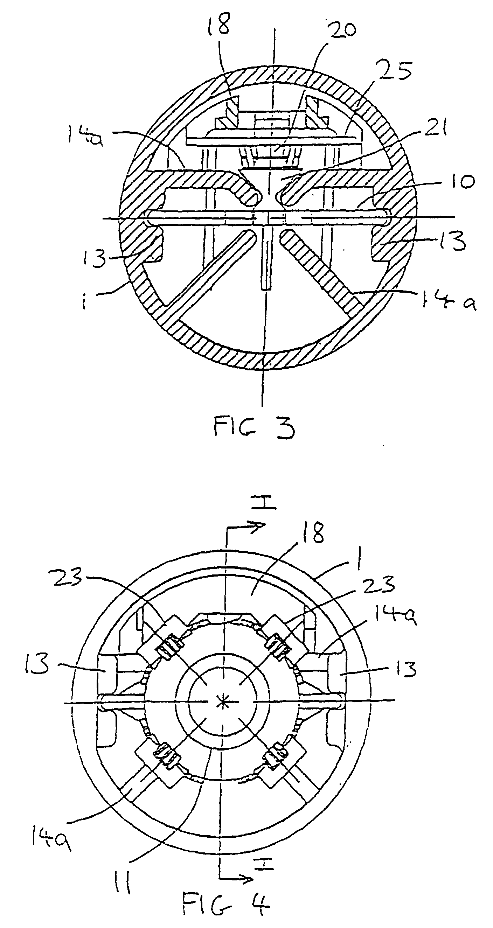

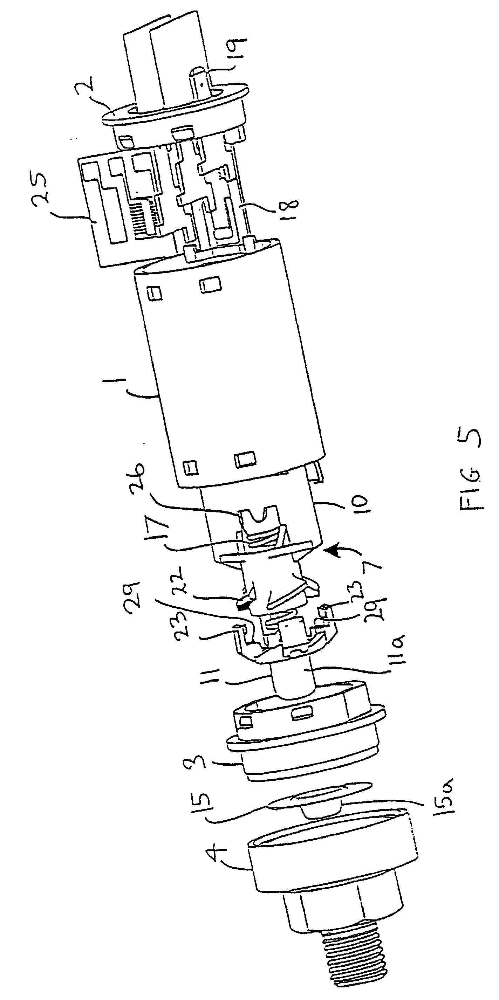

Mounted within the main body 1 is an actuator, shown generally by reference numeral 7. The actuator comprises a body part 8, comprising a first cylindrical portion 9 and a projecting end plate 10, and an adjustment cap 11 that is engaged with the cylindrical portion 9 at one end by means of an adjustable screwthreaded connection 12. The actuator 7 is slidably mounted within the main body 1. For this purpose, the projecting end plate 10 slides in respective guideways 13 (see Figure 4) provided on the inner circumferential surface of the main body 1. In addition, a support 14 comprising inwardly extending web portions 14a provide lateral support for the central portion of the projecting end plate 10, as best shown in Figure 3. By rotating the adjustment cap 11 relative to the body part 8 about the longitudinal axis of the pressure sensor, the relative axial positions of the adjustment cap 11 and body part 8 may be adjusted to a limited extent, for a purpose to be explained later.

With particular reference to Figure 1, a rolling diaphragm 15 has its outer marginal portion clamped between a transverse end face of the collar 3 and a complementary transverse end face of the end closure 4. An annular ridge 16 formed on the diaphragm provides a fluid-tight seal with the contiguous end face of the closure 4. Alternatively, an O-ring could be received in an annular groove formed in the contiguous face of the end closure 4 for forming the fluid-tight seal. As shown, a cylindrical portion 15a of the diaphragm, which provides a rolling function, extends around an axial cylindrical portion 11a of the adjustment cap. The axial extent of this rolling portion of the diaphragm 15 is sufficient to accommodate the maximum axial displacement of the actuator, which in a typical design is 6mm, for example. To assist the rolling action of the cylindrical portion 15a of the diaphragm on the cylindrical portion 11a of the adjustment cap, both cylindrical portions can be given a slight taper in the direction towards the pressure port 5.

A compression spring 17 extends through the cylindrical portion 9 and acts at one end against the adjustment cap 11 and at the other end against the adjacent edges of the support webs 14a. To locate the compression spring 17 centrally relative to the adjustment cap 15, a stud 24 on the cap projects inside the end of the compression spring. A cut-out 26 (see Figure 5) in the end plate 10 allows the compression spring 17 to project beyond the end of the cylindrical portion 9 and come into contact with the webs 14a.

The end closure 2 carries a support member 18 that extends within the main body 1. Mounted on this support member is the ceramic substrate of a thick film potentiometer 25. The potentiometer is connected to external electrical connections 19 projecting from the end closure 2, for connection to external circuitry (not shown). The potentiometer includes a wiper 20 which is in electrical contact with a resistance portion of the potentiometer at one end and carried at the other end on a carrier 21 on the underside of the projecting end plate 10. The axial position of the wiper 20 on the ceramic substrate determines a resistance value to be measured by the potentiometer.

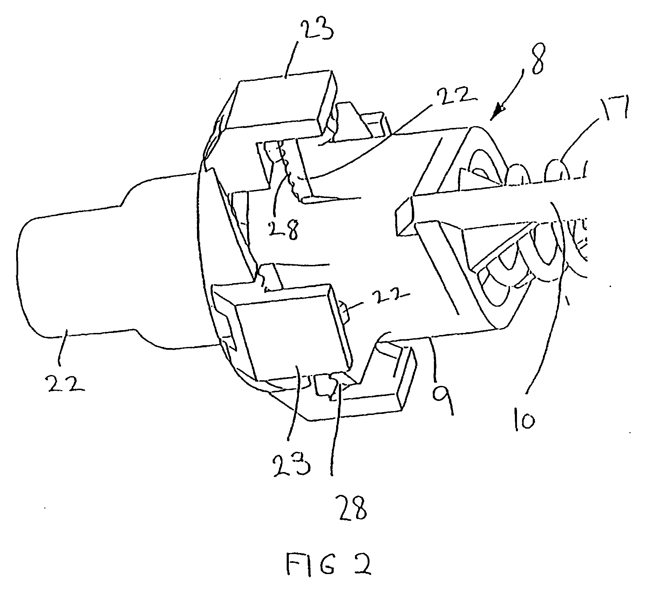

Preferably, as best shown in Figures 2 and 5, the screwthreaded connection 12 comprises an arrangement of outward projections 22 spaced at intervals around the end of the body part in cruciform arrangement (see Figure 4), each projection being of part-helical form, as shown in Figure 5. The screwthreaded connection also comprises an arrangement of claw-like projections 23, also forming a cruciform arrangement as shown in Figure 4, che claws of the adjustment cap 11 each engaging with a respective part-helical projection 22 on the cylindrical portion 9 of the actuator 7. By turning the adjustment cap clockwise or anticlockwise, the body part 8 advances relatively towards or away from, respectively, the adjustment cap 11. This cap has a fixed position when no fluid pressure is admitted into pressure chamber 6, determined as that in which the biasing force of the compression spring 17 is released, the diaphragm being in its natural, undeflected, condition. The corresponding position of the wiper 20 can be adjusted by turning the adjustment cap, such that the potentiometer output signal indicates a zero pressure value corresponding to a zero value of admitted fluid pressure.

In a preferred arrangement, the end face of each projection of part-helical form is formed with serrations 28 (Figures 2 and 5) on its ends face and a small protuberance 29 on each respective claw-like projection 23 is positioned to be in engagement with the serrations. In this way, the serrations define discrete set angular positions of the adjustment cap relative to the body part, so that when the calibration of the potentiometer has been set, the adjustment cap will remain in the corresponding predetermined angular position.

Apart from the thick film potentiometer, the electrical connections, the wiper and the compression spring 17, all of the described components making up the pressure sensor are suitably plastics moldings. The axially-extending circumferential connection between the projecting end portion of the collar 3 and enclosure 4 can be effected by any suitable means, such as by ultrasonic welding.

The pressure sensor operates as follows. The pressure port 5 is connected in a domestic central heating boiler to admit the fluid pressure of the central heating circuit. When no hydraulic pressure is applied to the pressure port 5, such as prior to installation of the pressure sensor or following draining of the system, the spring 17 returns the actuator to its left-most position, shown in Figure 1. However, when fluid pressure enters the pressure chamber 6, it acts against the rolling diaphragm 15 to urge the actuator 7 to the right against the bias of the compression spring 17. The actuator adopts a position, displaced to the right, dependent on the magnitude of the admitted pressure. The higher the pressure, the further to the right the actuator is displaced. In turn, the wiper 20 is also displaced by a corresponding amount, due to the one-to-one positional relationship between the actuator and the wiper. As the wiper 20 moves across the ceramic substrate of the thick film potentiometer, the potentiometer resistance changes in proportion to the pressure applied. The resulting change in resistance produces a corresponding output voltage signal from the potentiometer, which is proportional to the admitted fluid pressure. This signal can be used to shut-down the boiler when the detected pressure exceeds or falls below a predetermined level, or to respond in any other desired way.

Due to the effect of variation in the free length of the compression spring and manufacturing tolerances in the molded parts, it is necessary to calibrate the potentiometer in the factory, during manufacture. For this purpose, the adjustment cap 11 is rotated so as to adjust the axial position of the wiper 20, until the relationship between the resistance value, or output voltage, set on the potentiometer and the axial position of the adjustment cap 11 meets a prespecified design specification. Normally, this will entail setting the potentiometer to an output signal representing zero pressure, when no fluid pressure is admitted into pressure chamber 6.

From the above description, it will be appreciated that the pressure sensor has the advantage of very simple construction, while at the same time allowing fine calibration of the potentiometer in the factory. Once the calibration has been correctly set using the adjustment cap 11, the setting cannot be tampered with because the adjustment cap is no longer accessible from the exterior of the fully assembled pressure sensor.

In addition, because of the one-to-one positional relationship between the actuator and the wiper 20, no mechanical amplifier is required to convert any smaller movement of the actuator into large enough movement of the wiper to allow adequate adjustment for calibration purposes. Pressure sensors are known using rolling diaphragms where the portion of the diaphragm extending around the axial end portion of an actuator is considerably less than in the case of the disclosed rolling diaphragm, because the actuator is designed to have smaller axial movement and a mechanical amplifier is used to couple the actuator to the potentiometer wiper.

Although the disclosed pressure sensor includes a thick film potentiometer for providing an output voltage proportional to the admitted fluid pressure, it will be appreciated that the particular constructional form that the potentiometer takes is not material, and it could instead be realised by a potentiometer of alternative construction, or by any other form of transducer that provides an electrical output signal in dependence upon the admitted fluid pressure. Such transducer could even be a switch which operates when a predetermined pressure level is reached.

## Claims

1. A pressure sensor comprising a main body defining a pressure port (5), an actuator (7) which is movably mounted within the body (1) so as to be urged in an axial direction, under fluid pressure admitted through said pressure port, against the action of a spring means (17) and a calibratable transducer (25) coupled to the actuator (7) for providing an output signal dependent on the axial position of said actuator, said actuator including an adjustment device (8, 11) for setting the calibration of said transducer, said adjustment device comprising a body part (8), operatively coupled at one end to said transducer, and an adjustment cap (11), which is coupled to the body part (8) by means of an adjustable screwthreaded connection (12) and against which the spring means (17) acts, there being a diaphragm (15) mounted within said main body (1) with one side thereof acting on the adjustment cap (11) and the other side arranged to be subjected to the fluid pressure admitted through said pressure port (5), **characterized in that** the adjustment cap (11) is coupled to the other end of the body part (8) and such coupling is by means of direct screwthreaded engagement between the adjustment cap and said other end of the body part, provided by said adjustable screwthreaded connection (12).

2. A pressure sensor according to claim 1, wherein the spring means is a compression spring (17) acting at one end against a support (14) fixed within said main body (1) and at the other end against said adjustment cap (11), said body part being in the form of a cylinder through which the compression spring (17) extends.

3. A pressure sensor according to claim 1 or 2, wherein said screwthreaded connection (12) comprises an arrangement of outward projections (22) spaced at intervals around said other end of said body part, each of part-helical form, and an arrangement of claw-like projections (23) on said adjustment cap (11), each such projection engaging around a respective outward projection (22).

4. A pressure sensor according to claim 3, wherein the part-helical end face of each outward projection (22) facing the adjustment cap is formed with serrations (28), defining discrete set angular positions of said adjustment cap (11) relative to said body part (8), and each claw-like projection (23) is formed with a protuberance (29) for engagement with said serrations in any selected one of said set angular positions.

5. A pressure sensor according to any one of claims 1 to 4, wherein said diaphragm (15) is a rolling diaphragm, a portion of which extends around an axial cylindrical end portion (11a) of said adjustment cap (11).

6. A pressure sensor according to any preceding claim, wherein said transducer (25) is coupled to a mechanical operating part (20) of the actuator (7) for providing an output signal dependent on the axial position of said actuator, there being a one-to-one axial positional relationship between the axial positions of the actuator (7) and the mechanical operating part (20).

7. A pressure sensor according to any preceding claim, wherein said transducer is a thick film potentiometer (25).

8. A pressure sensor according to claim 7 as appended to claim 6, wherein said mechanical operating part (20) is a wiper of said potentiometer (25) and a slide member (10)

## Patentansprüche

1. Drucksensor, umfassend einen Hauptkörper, der einen Druckanschluss (5) definiert, einen Aktor (7), der innerhalb des Körpers (1) beweglich angebracht ist, um so in eine axiale Richtung unter einem Flüssigkeitsdruck, der durch den Druckanschluss eingelassen ist, gegen die Wirkung einer Federeinrichtung (17) und eines kalibrierbaren Umformers (25), der mit dem Aktor (7) gekoppelt ist, gedrückt zu werden, um ein Ausgangssignal bereitzustellen, das abhängig von der axialen Position des Aktors ist, wobei der Aktor eine Justiervorrichtung (8, 10) zum Einstellen der Kalibrierung des Umformers einschließt, wobei die Justiervorrichtung ein Körperteil (8), das betriebsmäßig an einem Ende an den Umformer gekoppelt ist, und eine Justierkappe (11) umfasst, die an das Körperteil (8) mittels einer justierbaren Schraubgewindeverbindung (12) gekoppelt ist, und gegen welche die Federeinrichtung (17) wirkt, wobei eine Membran (15) vorhanden ist, die innerhalb des Hauptkörpers (1) angebracht ist, wobei eine Seite davon auf die Justierkappe (11) wirkt, und die andere Seite angeordnet ist, dem Flüssigkeitsdruck unterworfen zu sein, der durch den Druckanschluss (5) eingelassen ist, **dadurch gekennzeichnet, dass** die Justierkappe (11) mit dem anderen Ende des Körperteils (8) gekoppelt ist und eine derartige Kopplung mittels eines direkten Schraubgewindeeingriffs zwischen der Justierkappe und dem anderen Ende des Körperteils vorhanden ist, der durch die justierbare Schraubgewindeverbindung (12) bereitgestellt ist.

2. Drucksensor nach Anspruch 1, **dadurch gekennzeichnet, dass** die Federeinrichtung eine Druckfeder (17) ist, die an einem Ende gegen eine Halterung (14), die innerhalb des Hauptkörpers (1) befestigt ist, und an dem anderen Ende gegen die Justierkappe (11) wirkt, wobei das Körperteil in der Form eines Zylinders vorhanden ist, durch welchen die Druckfeder (17) verläuft.

3. Drucksensor nach Anspruch 1 oder 2, **dadurch gekennzeichnet, dass** die Schraubgewindeverbindung (12) eine Anordnung von Außenvorsprüngen (22), die in Intervallen um das andere Ende des Körperteils herum, jedes von Teil-helikaler Form, beabstandet sind, und eine Anordnung von klauenähnlichen Vorsprüngen (23) auf der Justierkappe (11) umfasst, wobei jeder derartige Vorsprung um einen jeweiligen Außenvorsprung (22) herum eingreift.

4. Drucksensor nach Anspruch 3, **dadurch gekennzeichnet, dass** die Teil-helikale Endfläche jedes Außenvorsprungs (22), der der Justierkappe gegenübersteht, mit Verzahnungen (28) gebildet ist, die einen diskreten Satz von Winkelpositionen der Justierkappe (11) relativ zu dem Körperteil (8) definieren, und jeder klauenähnliche Vorsprung (23) mit einer Ausstülpung (29) zum Eingriff in die Verzahnungen in einer ausgewählten der eingestellten Winkelpositionen gebildet ist.

5. Drucksensor nach einem der Ansprüche 1 bis 4, **dadurch gekennzeichnet, dass** die Membran (15) eine Walzmembran ist, deren einer Abschnitt um einen axialen zylindrischen Endabschnitt (11a) der Justierkappe (11) herum verläuft.

6. Drucksensor nach einem voranstehenden Anspruch, **dadurch gekennzeichnet, dass** der Umformer (25) mit einem mechanischen Betriebsteil (20) des Aktors (7) gekoppelt ist, um ein Ausgangssignal bereitzustellen, das von der axialen Position des Aktors abhängig ist, wobei eine Eins-zu-Eins-axiale Positionsbeziehung zwischen den axialen Positionen des Aktors (7) und des mechanischen Betriebsteils (20) vorhanden ist.

7. Drucksensor nach einem voranstehenden Anspruch, **dadurch gekennzeichnet, dass** der Umformer ein Dickschichtpotentiometer (25) ist.

8. Drucksensor nach Anspruch 7, soweit abhängig von Anspruch 6, **dadurch gekennzeichnet, dass** das mechanische Betriebsteil (20) ein Schleifer des Potentiometers (25) und ein Gleitelement (10) ist.

## Revendications

1. Capteur de pression comprenant un corps principal définissant un orifice de pression (5), un actionneur (7) monté de manière mobile dans le corps (1) de façon à être poussé dans une direction axiale, sous l'effet de la pression d'un fluide admis via ledit orifice de pression, à l'encontre de l'action d'un moyen formant ressort (17), et un transducteur étalonnable (25) couplé à l'actionneur (7) pour produire un signal de sortie dépendant de la position axiale dudit actionneur, ledit actionneur comportant un dispositif de réglage (8, 11) pour établir l'étalonnage dudit transducteur, ledit dispositif de réglage comportant une partie (8) de corps, coopérant à une première extrémité avec ledit transducteur, et un bouchon de réglage (11), qui est couplé avec la partie (8) de corps à l'aide d'un raccord fileté réglable (12) et contre lequel agit le moyen formant ressort (17), une membrane (15) étant montée dans ledit corps principal (1), une première face de celle-ci agissant sur le bouchon de réglage (11) et l'autre face étant agencée pour être soumise à la pression du fluide admis via ledit orifice de pression (5), **caractérisé en ce que** le bouchon de réglage (11) est couplé avec l'autre extrémité de la partie (8) de corps, et ce couplage se fait par vissage direct entre le bouchon de réglage et ladite autre extrémité de la partie de corps, réalisé à l'aide dudit raccord fileté réglable (12).

2. Capteur de pression selon la revendication 1, dans lequel le moyen formant ressort est un ressort de compression (17) agissant, à une première extrémité, contre un support (14) fixé dans ledit corps principal (1) et, à l'autre extrémité, contre ledit bouchon de réglage (11), ladite partie de corps se présentant sous la forme d'un cylindre à travers lequel s'étend le ressort de compression (17).

3. Capteur de pression selon la revendication 1 ou 2, dans lequel ledit raccord fileté (12) comporte un agencement de saillies (22) orientées vers l'extérieur espacées à intervalles autour de ladite autre extrémité de ladite partie de corps, chacune partiellement en forme d'hélice, et un agencement de saillies (23) en forme de griffes sur ledit bouchon de réglage (11), chacune de ces saillies s'engageant à la périphérie d'une saillie respective (22) orientée vers l'extérieur.

4. Capteur de pression selon la revendication 3, dans lequel la face d'extrémité partiellement hélicoïdale de chaque saillie (22) orientée vers l'extérieur en regard du bouchon de réglage est pourvue de dentelures (28), définissant des positions angulaires distinctes établies dudit bouchon de réglage (11) par rapport à ladite partie (8) de corps, et chaque saillie (23) analogue à une griffe est pourvue d'une protubérance (29) destinée à s'engager dans lesdites dentelures dans l'une quelconque, choisie, desdites positions angulaires établies.

5. Capteur de pression selon l'une quelconque des revendications 1 à 4, dans lequel ladite membrane (15) est une membrane roulante dont une partie entoure une partie d'extrémité axiale cylindrique (1 la) dudit bouchon de réglage (11).

6. Capteur de pression selon l'une quelconque des revendications précédentes, dans lequel ledit transducteur (25) est couplé avec un organe mécanique (20) de l'actionneur (7) pour produire un signal de sortie dépendant de la position axiale dudit actionneur, une relation de position axiale individuelle existant entre les positions axiales de l'actionneur (7) et de l'organe mécanique (20).

7. Capteur de pression selon l'une quelconque des revendications précédentes, dans lequel ledit transducteur est un potentiomètre (25) à couche épaisse.

8. Capteur de pression selon la revendication 7 annexée à la revendication 6, dans lequel ledit organe mécanique (20) est un curseur dudit potentiomètre (25) et une glissière (10).
